# EUROPEAN PATENT APPLICATION

(11) **EP 4 765 328 A1**
(43) Date of publication of application: **24.06.2026**
(21) Application number: 24894545.3
(22) Date of filing: 18.11.2024
(51) Int. Cl.: H01M 10/613, H01M 10/6561, H01M 10/04

(54) **COOLING UNIT FOR SECONDARY BATTERY, AND SECONDARY BATTERY MANUFACTURING SYSTEM COMPRISING SAME**

(30) Priority: 21.11.2023 KR 20230162772
(71) Applicant: LG Energy Solution, Ltd., Seoul 07335 (KR)
(72) Inventor: KIM, Dae Wook, Daejeon 34122 (KR); SEO, In Jae, Daejeon 34122 (KR)
(74) Representative: Goddar, Heinz J.
(86) International application number: PCT/KR2024/018160
(87) International publication number: WO 2025/110652

(57) **Abstract**

A cooling unit for a secondary battery according to an embodiment of the present disclosure may cool a folded terrace portion of a pouch-type secondary battery. The cooling unit for the secondary battery may include a main body, wherein at least part of the main body curves or bends in a direction surrounding the folded terrace portion; and a plurality of spray units disposed at an inner surface of the main body and configured to spray gas toward the folded terrace portion.

## Description

### TECHNICAL FIELD

### CROSS-REFERENCE TO RELATED APPLICATIONS

The present application claims priority to Korean Patent Application No. 10-2023-0162772 filed on November 21, 2023 in the Republic of Korea, the disclosure of which is incorporated herein by reference.

### TECHNICAL FIELD

The present disclosure relates to a cooling unit for a secondary battery configured to cool a folded terrace portion of a pouch-type secondary battery, and a secondary battery manufacturing system including the same.

### BACKGROUND ART

As opposed to disposable primary batteries, secondary batteries are rechargeable batteries and can be used in a wide range of applications including digital cameras, mobile phones, laptop computers and hybrid electric vehicles. Examples of secondary batteries may include nickel-cadmium batteries, nickel-metal hydride batteries, nickel-hydrogen batteries, lithium secondary battery and so on.

Among secondary batteries, many studies are being conducted on lithium secondary batteries having high energy density and discharge voltage, and recently, lithium secondary batteries are used to form a module in a manner of connecting a plurality of pouch-type secondary batteries having flexibility.

As a pouch-type secondary battery uses a pouch-type battery case (a pouch) as an outer packaging that covers an electrode assembly, the electrode assembly has a structure in which a positive electrode plate and a negative electrode plate, each filled with an electrode active material, are stacked with a separator interposed between the positive electrode plate and the negative electrode plate. A positive tab is formed at one side of the positive electrode plate, and a negative tab is formed at one side of the negative electrode plate. Each of the tabs is connected to an electrode lead for connection to an external circuit. The electrode assembly is sealed by the pouch-type battery case or the outer packaging.

The pouch-type battery case includes a cup portion for accommodating the electrode assembly, and a terrace portion located around the cup portion and configured to seal the electrode assembly. Additionally, a part of the terrace portion may be folded to increase energy density.

For example, the terrace portion may be folded by Single Side Folding (SSF) or Double Side Folding (DSF). A folding apparatus and method of the terrace portion is well known (for example, KR2023-0032886A) and its detailed description is omitted.

After a predetermined time passes, the folded terrace portion may experience springback that the terrace portion is not kept in folded state and is partially unfolded again. To prevent springback, a taping process is performed to fix the folded terrace portion using a tape or the like. However, the taping process increases complexity of the secondary battery manufacturing process and increases the required time and cost.

### SUMMARY

### TECHNICAL PROBLEM

The present disclosure is directed to providing a cooling unit for a secondary battery for preventing springback of a folded terrace portion of a pouch-type secondary battery and a secondary battery manufacturing system including the same.

The present disclosure is further directed to providing a cooling unit for a secondary battery for cooling a folded terrace portion rapidly and uniformly and a secondary battery manufacturing system including the same.

### TECHNICAL SOLUTION

A cooling unit for a secondary battery according to an embodiment of the present disclosure may cool a folded terrace portion of a pouch-type secondary battery. The cooling unit for the secondary battery may include a main body, wherein at least part of the main body curves or bends in a direction surrounding the folded terrace portion; and a plurality of spray units disposed at an inner surface of the main body and configured to spray gas toward the folded terrace portion.

The plurality of spray units may be configured to spray the gas of lower temperature than room temperature.

The plurality of spray units may be configured to spray the gas toward the folded terrace portion at different angles.

The plurality of spray units may be configured to spray the gas at an angle closer to a horizon as the spray unit is located closer to a center of the main body.

The main body may be extended parallel to a length direction of the folded terrace portion, and the plurality of spray units may be arranged in multiple lines along the length direction of the folded terrace portion.

The main body may include a center part positioned to overlap the secondary battery in a length direction or width direction of the secondary battery; and a first end part and a second end part connected to the center part and located at opposite sides with the center part positioned therebetween. The first end part and the second end part may curve or bend in a direction of getting closer to each other.

The center part, the first end part and the second end part may curve with a same radius of curvature.

The plurality of spray units may include a first spray unit configured to spray the gas from a side of the folded terrace portion in a thickness direction of the secondary battery; and a second spray unit configured to spray the gas from an opposite side of the folded terrace portion in the thickness direction of the secondary battery.

The plurality of spray units may further include a third spray unit located between the first spray unit and the second spray unit.

The main body may have a feed flow channel inside, and the feed flow channel may communicate with the plurality of spray units and be configured to feed the gas.

A secondary battery manufacturing system according to an embodiment of the present disclosure may include a transfer unit configured to transfer a pouch-type secondary battery; and a cooling unit configured to cool a folded terrace portion of the secondary battery. The cooling unit may include a main body, wherein at least part of the main body curves or bends in a direction surrounding a transfer path of the secondary battery; and a spray unit disposed at an inner surface of the main body and configured to spray gas toward the folded terrace portion of the secondary battery.

### ADVANTAGEOUS EFFECTS

According to an exemplary embodiment of the present disclosure, as at least part of the main body curves or bends, the plurality of spray units disposed at the inner surface of the main body may be configured to spray gas toward the folded terrace portion of the secondary battery at different angles. Accordingly, it may be possible to cool the folded terrace portion to harden it rapidly, uniformly and evenly, and prevent springback of the folded terrace portion.

Besides, the effects of the present disclosure may include effects that can be easily predicted by those skilled in the art from the exemplary embodiments of the present disclosure.

### BRIEF DESCRIPTION OF THE DRAWINGS

The accompanying drawings illustrate the exemplary embodiments of the present disclosure and together with the following detailed description, serve to provide a better understanding of the technical aspect of the present disclosure, and thus the present disclosure should not be construed as being limited to the drawings.
FIG. 1 is an assembly diagram of a pouch-type secondary battery.
FIG. 2 is a plan view of a pouch-type secondary battery.
FIG. 3 is a side view of a pouch-type secondary battery.
FIG. 4 is a schematic diagram of a cooling unit for a secondary battery according to an embodiment of the present disclosure.
FIG. 5 is a front view of the cooling unit for the secondary battery shown in FIG. 4.
FIG. 6 is a front view of a cooling unit for a secondary battery according to another embodiment of the present disclosure.

### DETAILED DESCRIPTION

Hereinafter, the exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, the terms or words used in the specification and the appended claims should not be construed as limited to general and dictionary meanings and rather, should be interpreted based on the meanings and concepts corresponding to the technical aspect of the present disclosure on the basis of the principle that the inventor is allowed to define the terms appropriately for the best explanation.

In the drawings, each element of a secondary battery according to an embodiment of the present disclosure is schematically shown, and the size of the element or the thickness of the line may be somewhat exaggerated for convenience of understanding.

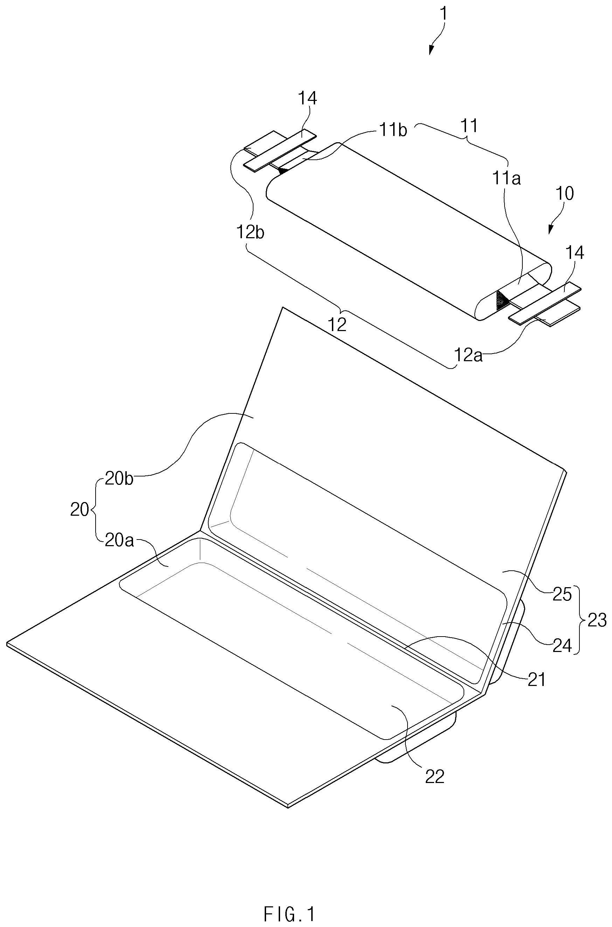

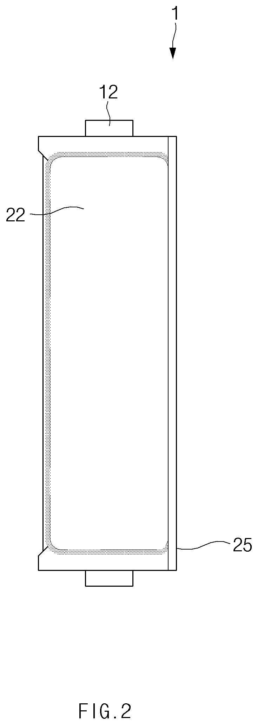

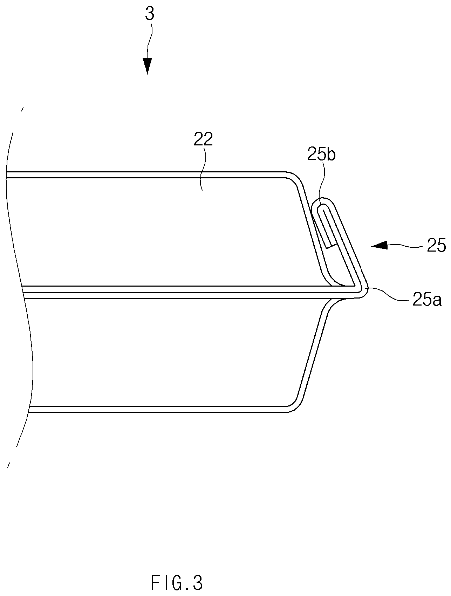

FIG. 1 is an assembly diagram of a pouch-type secondary battery, FIG. 2 is a plan view of the pouch-type secondary battery, and FIG. 3 is a side view of the pouch-type secondary battery.

The pouch-type secondary battery 1 (hereinafter 'secondary battery') described herein may be manufactured by a manufacturing apparatus and/or method according to the present disclosure. The secondary battery 1 may be in a state at a specific time in the manufacturing process, or in a finally completed state, and may be appropriately interpreted according to the context or needs.

The secondary battery 1 may include an electrode assembly 10 and a pouch-type battery case 20 (hereinafter, 'battery case').

The electrode assembly 10 may be formed by stacking a positive electrode and a negative electrode in an alternating manner with a separator interposed between them. That is, the electrode assembly 10 may include the plurality of electrodes, and the separator interposed between the plurality of electrodes to insulate the plurality of electrodes. The electrode assembly 10 may be accommodated in the battery case 20, to be more specific, an accommodation portion 22 as described below, together with an electrolyte solution.

The electrode assembly 10 may come in various types, for example, a stack type, a jellyroll type, a stack-and-folding type and so on, and the electrode assembly 10 is not limited to a particular type.

The electrode assembly 10 may include an electrode tab 11. The electrode tab 11 may be connected to each of the positive electrode and the negative electrode of the electrode assembly 10, and may be protruded outward from the electrode assembly 10 to act as a movement path of electrons between the inside and outside of the electrode assembly 10.

The electrode tab 11 may be formed by tailoring an uncoated portion of an electrode current collector or by connecting a conductor to the uncoated portion by ultrasonic welding.

The electrode tab 11 may include a positive tab 11a connected to the positive electrode, and a negative tab 11b connected to the negative electrode. The positive tab 11a and the negative tab 11b may be protruded in different directions of the electrode assembly 10, but the protruding direction is not limited thereto. The positive tab 11a and the negative tab 11b may be protruded in various directions, for example, protruded from one side in the same direction in parallel to each other.

An electrode lead 12 that supplies electricity to the outside of the battery cell 1 may be connected to the electrode tab 11 of the electrode assembly 10. Additionally, a part of the electrode lead 12 may be covered by an insulator 14. The insulator 14 may be sealed with a first case 20a and a second case 20b. Accordingly, the insulator 14 may insulate the electrode lead 12 from the battery case 20, and maintain the sealing of the battery case 20. The insulator 14 may generally include an insulating tape that is easy to attach to the electrode lead 12 and has a relatively small thickness, but is not limited thereto and may include any element that insulates the electrode lead 12.

The electrode lead 12 may have one end connected to the electrode tab 11 and the other end protruded outward from the battery case 20. The electrode lead 12 may include a positive lead 12a connected to the positive tab 11a, and a negative lead 12b connected to the negative tab 11b.

The electrode lead 12 may electrically connect the electrode assembly 10 to the outside. Additionally, as the positive tab 11a and the negative tab 11b are protruded toward different directions, the positive lead 12a and the negative lead 12b may be also extended toward different directions.

The battery case 20 may accommodate the electrode assembly 10 inside and be formed by forming of a laminated sheet. For example, when drawing the laminated sheet having flexibility using a die and a punch, a part of the laminated sheet may be stretched to form the accommodation portion 22 having a pocket-shaped accommodation space, then the battery case 20 may be manufactured.

However, the configuration of the accommodation portion 22 is not limited thereto, and the accommodation portion 22 may be formed otherwise than the shown configuration. For example, the accommodation portion 22 may be formed by folding the laminated sheet into a preset shape.

Hereinafter, the battery case 20 may be in a state at a specific time in the manufacturing process, or in a finally completed state. That is, the description of the battery case 20 may encompass the sealed state as shown in FIG. 2 or the unfolded state as shown in FIG. 1, and may be appropriately interpreted according to the context or needs.

The battery case 20 accommodating the electrode assembly 10 such that a part of the electrode lead 12 is exposed, may be sealed.

The battery case 20 may include the first case 20a and the second case 20b sealed together with the electrode assembly 10 positioned between them.

Preferably, the accommodation portion 22 may be formed in at least one of the first case 20a or the second case 20b. Additionally, the surrounding area of the accommodation portion 22 may form a terrace portion 23. That is, the battery case 20 may include the accommodation portion 22 and the terrace portion 23 located at the outer side of the accommodation portion 22.

The first case 20a and the second case 20b may be connected to each other by a folding portion 21. However, the present disclosure is not limited thereto, and the first case 20a and the second case 20b may be separately manufactured.

The accommodation portion 22 may define the accommodation space for accommodating the electrode assembly 10. The accommodation portion 22 may have the pocket shape.

The following description is made based on the accommodation portion 22 formed in each of the first case 20a and the second case 20b. Those skilled in the art will easily understand that the accommodation portion 22 is only formed in any one of the pair of cases 20a, 20b.

The accommodation portions 22 of the pair of cases 20a, 20b may be disposed facing each other to accommodate the electrode assembly 10 together. That is, the accommodation portions 22 of the pair of cases 20a, 20b may be disposed facing each other to define the accommodation space in which the electrode assembly 10 is accommodated. In this case, compared to the accommodation portion 22 formed in any one of the pair of cases 20a, 20b, the electrode assembly 20 may accommodate the electrode assembly 10 having larger thickness and higher capacity.

The first case 20a and the second case 20b may be connected with the folding portion 21. In an unfold state of the first case 20a and the second case 20b, a part of the folding portion 21 may be located between the accommodation portion 22 of the first case 20a and the accommodation portion 22 of the second case 20b, and the other part of the folding portion 21 may be located between the terrace portion 23 of the first case 20a and the terrace portion 23 of the second case 20b.

When the folding portion 21 is folded, the first case 20a and the second case 20b may face each other. The folding portion 21 may be extended parallel to the length direction of the electrode assembly 10 but is not limited thereto.

Each case 20a, 20b may include the terrace portion 23 located at the periphery of the accommodation portion 22. More specifically, the terrace portion 23 may include a first terrace portion 24 where the electrode lead 12 is protruded, and a second terrace portion 25 connected to the first terrace portion 24.

As an example, as shown in FIG. 1, the first terrace portion 24 may include a pair of first terrace portions 24 located at two sides of the accommodation portion 22 in the length direction, and the second terrace portion 25 may connect the pair of first terrace portions 24 and be located at one side of the accommodation portion 22 in the width direction. In this case, the first terrace portion 24 may be extended in the width direction of the accommodation portion 22, and the second terrace portion 25 may be extended in the length direction of the accommodation portion 22.

As another example, when the first case 20a and the second case 20b are separate components not connected with the folding portion 21, the first terrace portion 24 may include a pair of first terrace portions 24 located at two sides of the accommodation portion 22 in the length direction, and the second terrace portion 25 may include a pair of second terrace portions 25 connecting the pair of first terrace portions 24 and located at two sides of the accommodation portion 22 in the width direction.

When the first case 20a and the second case 20b are connected with the folding portion 21, any one of the first terrace portion 24 and the second terrace portion 25 may be located at the opposite side of the accommodation portion 22 to the folding portion 21.

As an example, as shown in FIG. 1, the second terrace portion 25 may be located at the opposite side of the accommodation portion 22 to the folding portion 21. In this case, the pair of first terrace portions 24 may connect the folding portion 21 to the second terrace portion 25. That is, the pair of electrode leads 12 may be extended in the opposite directions and protruded outwards through each first terrace portion 24.

As another example, the first terrace portion 25 may be located at the opposite side of the accommodation portion 22 to the folding portion 21. That is, the pair of electrode leads 12 may be extended parallel to each other in a direction away from the folding portion 21 and protruded outwards through the first terrace portion 24. In this case, the second terrace portion 25 may include a pair of second terrace portions 25, and connect the folding portion 21 to the first terrace portion 24.

As described above, the extension direction and position of the first terrace portion 24 and the second terrace portion 25 is not limited, and may be formed otherwise according to needs.

When the folding portion 21 is folded, the terrace portions 23 of the first case 20a and the second case 20b may contact each other. In this instance, the insulator 14 of the electrode assembly 10 may be located between the terrace portions 23 of the pair of cases 20a, 20b. For example, the insulator 14 may be located between the first terrace portions 24 of the pair of cases 20a, 20b.

The terrace portions 23 of the first case 20a and the second case 20b may be sealed by joining in contact state. The terrace portions 23 of the first case 20a and the second case 20b may be sealed by bonding polymer layers (for example, polypropylene), each forming the innermost layer.

More specifically, the first terrace portions 24 of the first case 20a and the second case 20b may be sealed together, and parts of them may be sealed with the insulator 14. The second terrace portions 25 of the first case 20a and the second case 20b may be sealed together. After the second terrace portions 25 are sealed, some outer parts of the second terrace portion 25 may be removed by trimming.

At least part of the sealed terrace portion 23 may be folded at least one time. More specifically, the second terrace portion 25 may be folded at least one time. The second terrace portion 25 may be folded by Single Side Folding (SSF) or Double Side Folding (DSF). Preferably, the second terrace portion 25 may be folded by Double Side Folding (DSF) as shown in FIG. 3.

The second terrace portion 25 may be referred to as 'folded terrace portion'.

The folded terrace portion 25 may include a first folding portion 25a and a second folding portion 25b. The first folding portion 25a and the second folding portion 25b may be a folded part of the second terrace portion 25.

The first folding portion 25a may be formed by folding a part of the second terrace portion 25 closer to the accommodation portion 22. The second folding portion 25b may be formed by folding a part of the second terrace portion 25 farther away from the accommodation portion 22. That is, the second folding portion 25b may be formed at the outer position than the first folding portion 25a. The folding angle of the second folding portion 25b may be larger than the folding angle of the first folding portion 25a. For example, the second folding portion 25b may be folded at approximately 180°, and the first folding portion 25a may be folded at approximately 90°.

Additionally, the folded terrace portion 25 may be pressed toward the accommodation portion 22 to further fold the first folding portion 25a. Accordingly, as shown in FIG. 3, the end portion of the folded terrace portion 25 may contact or be adjacent to the accommodation portion 22.

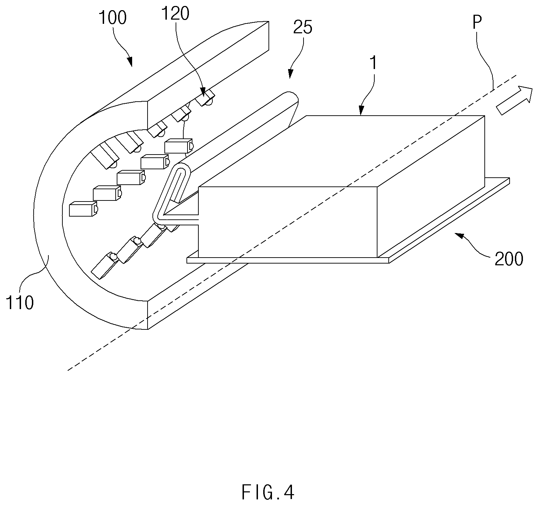

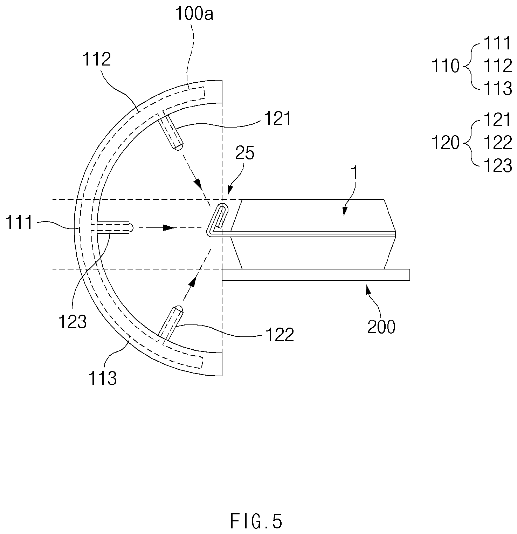

FIG. 4 is a schematic diagram of a cooling unit for a secondary battery according to an embodiment of the present disclosure, and FIG. 5 is a front view of the cooling unit for the secondary battery shown in FIG. 4.

As time passes, the folded terrace portion 25 may experience springback that the folded terrace portion 25 is not kept in folded state and is partially unfolded again. More specifically, when springback occurs, the first folding portion 25a may be partially unfolded, and the end portion of the folded terrace portion 25 may be away from the accommodation portion 22.

To prevent springback, a secondary battery manufacturing system according to an embodiment of the present disclosure (hereinafter 'manufacturing system') may include the cooling unit 100 configured to cool the folded terrace portion 25 of the secondary battery 1. The cooling unit 100 may cool the folded terrace portion 25 to harden it, thereby preventing springback.

The manufacturing system may include a transfer unit 200 to transfer the secondary battery 1. The transfer unit 200 may be configured to transfer the secondary battery 1 along a preset transfer path P. The configuration of the transfer unit 200 is not limited. For example, the transfer unit 200 may include a tray on which the secondary battery 1 is mounted, and a shuttle to transfer the tray.

The manufacturing system may include a folding unit (not shown) to fold the terrace portion 25 of the secondary battery 1. The folding unit may form the folded terrace portion 25 using heat and pressure. For example, the folding unit may include a plurality of folding blocks configured to move up or down in a preset order to fold the terrace portion 25, and a press block configured to press the folded terrace portion 25 toward the accommodation portion 22. Additionally, a heater (for example, a heatline) may be embedded in at least one of the plurality of folding blocks or the press block to apply heat to the terrace portion 25 while in contact with the terrace portion 25. The configuration and operation of the folding unit is well known and its detailed description is omitted.

The cooling unit 100 may be located at the more rear side than the folding unit with respect to the transfer path P of the secondary battery 1. The cooling unit 100 may cool the folded terrace portion 25 rapidly to cool down in the heat applied by the folding unit.

The cooling unit 100 may be located at one side with respect to the transfer path P of the secondary battery 1. The cooling unit 100 may be disposed parallel to the transfer path P of the secondary battery 1. In relation to this, the transfer unit 200 may transfer the secondary battery 1 such that the folded terrace portion 25 is kept parallel to the transfer path. Accordingly, the cooling unit may effectively cool the folded terrace portion 25 of the secondary battery 1 moving along the transfer path P.

More specifically, the cooling unit 100 may include a main body 110 and a plurality of spray units 120 disposed at the inner surface of the main body 110.

The main body 110 may be extended parallel to the length direction of the folded terrace portion 25. The main body 110 may be extended parallel to the transfer path P of the secondary battery 1.

The main body 110 may have a feed flow channel 100a inside, and the feed flow channel 100a may communicate with the plurality of spray units 120 as described below and be configured to feed gas. A gas feed pump (not shown) located outside of the cooling unit 100 may be connected to the feed flow channel 100a. Gas in the feed flow channel 100a may be sprayed through each of the plurality of spray units 120.

At least part of the main body 110 may curve or bend in a direction surrounding the folded terrace portion 25. At least part of the main body 110 may curve or bend in the direction surrounding the transfer path P of the secondary battery 1.

By this shape of the main body 110, the plurality of spray units 120 may be disposed such that they are directed towards different angles. The plurality of spray units 120 may be configured to spray gas toward the folded terrace portion 25 of the secondary battery 1 at different angles. Accordingly, the folded terrace portion 25 may be cooled rapidly, uniformly and evenly.

More specifically, the plurality of spray units 120 may be configured to spray gas at an angle closer to the horizon as it is disposed closer to the center of the main body 110. That is, the angle of each spray unit 120 may be blunter as the spray unit 120 is disposed closer to the center of the main body 110.

The configuration of each spray unit 120 is not limited. For example, each spray unit 120 may include a nozzle.

The type of gas sprayed from each spray unit 120 is not limited. The gas may refer to all types of gases including air.

As an example, each spray unit 120 may be configured to spray gas of lower temperature than room temperature. For example, each spray unit 120 may spray cold air by a vortex tube or a cold jet method. Accordingly, it may be possible to cool the folded terrace portion 25 more rapidly. However, the present disclosure is not limited thereto, and each spray unit 120 may be configured to spray gas of room temperature.

The main body 110 may include a center part 111 that overlaps the secondary battery 1, and a first end part 112 and a second end part 113 located at the opposite sides with the center part 111 positioned between them, in the length direction or width direction of the secondary battery 1.

The first end part 112 and the second end part 113 may be connected to the center part 111. The first end part 112 and the second end part 113 may curve or bend in a direction of getting closer to each other. The first end part 112 and the second end part 113 may be integrally formed with the center part 111, but is not limited thereto.

In the case of this embodiment, the main body 110 may curve in the direction surrounding the folded terrace portion 25. The main body 110 may curve in the direction surrounding the transfer path P of the secondary battery 1. Accordingly, it may be possible to focus gas sprayed from the plurality of spray units 120 to the folded terrace portion 25.

As an example, as shown in FIGS. 4 and 5, the center part 111, the first end part 112 and the second end part 113 may curve with the same radius of curvature. Accordingly, it may be possible to further focus gas sprayed from the plurality of spray units 120 to the folded terrace portion 25.

However, the center part 111, the first end part 112 and the second end part 113 may have different radii of curvature or varying radii of curvature. Additionally, the center part 111 may be formed approximately vertically, and the first end part 112 and the second end part 113 may curve with respect to the center part 111.

The plurality of spray units 120 may be arranged in multiple lines along the length direction of the folded terrace portion 25 of the secondary battery 1. The plurality of spray units 120 may be arranged in multiple lines parallel to the transfer path P of the secondary battery 1. For example, the plurality of spray units 120 may be arranged in three lines as shown in FIG. 4.

Accordingly, while the secondary battery 1 is being transferred, the plurality of spray units 120 may continuously cool the folded terrace portion 25.

The plurality of spray units 120 may include a first spray unit 121 to spray gas from one side of the folded terrace portion 25, and a second spray unit 122 to spray gas from the other side, in the thickness direction of the secondary battery 1 (vertical direction in FIG. 5). The first spray unit 121 may be disposed at the inner surface of the first end part 112, and the second spray unit 122 may be disposed at the inner surface of the second end part 113.

The first spray unit 121 and the second spray unit 122 may be symmetrically arranged.

The plurality of spray units 120 may further include a third spray unit 123 located between the first spray unit 121 and the second spray unit 122. The third spray unit 123 may be disposed in the inner surface of the center part 111.

The first spray unit 121 and the second spray unit 122 may be disposed such that they are directed towards a predetermined angle with respect to the horizontal direction. The angle at which the third spray unit 123 is directed may be blunter than those of the first spray unit 121 and the second spray unit 122. For example, the third spray unit 123 may be disposed such that it is directed towards approximately horizontal direction.

The first spray unit 121 may be directed towards the second folding portion 25b of the folded terrace portion 25, or an area adjacent to the second folding portion 25b. The second spray unit 122 may be directed towards the first folding portion 25a of the folded terrace portion 25, or an area adjacent to the first folding portion 25a. Accordingly, each folding portion 25a, 25b of the folded terrace portion 25 may be cooled and hardened rapidly and intensively, thereby preventing springback with reliability.

The third spray unit 123 may be directed towards an area between the first folding portion 25a and the second folding portion 25b of the folded terrace portion 25. Accordingly, the entire folded terrace portion 25 may be cooled and hardened. However, the location where each spray unit 121, 122, 123 is directed towards is not limited to the foregoing description.

The first spray unit 121, the second spray unit 122 and the third spray unit 123 may include a plurality of first spray units 121, a plurality of second spray units 122 and a plurality of third spray units 123, respectively.

Each spray unit 121, 122, 123 may be arranged in multiple lines along the length direction of the folded terrace portion 25 of the secondary battery 1. Each spray unit 121, 122, 123 may be arranged in multiple lines parallel to the transfer path P of the secondary battery 1. For example, each spray unit 121, 122, 123 may be arranged in a single line. However, the present disclosure is not limited thereto.

When the first spray units 121 are arranged in multiple lines, the angle of each first spray unit 121 may be blunter as the first spray unit 121 is disposed closer to the center of the main body 110. When the second spray units 122 are arranged in multiple lines, the angle of each second spray unit 122 may be blunter as the second spray unit 122 is disposed closer to the center of the main body 110. When the third spray units 123 are arranged in multiple lines, the angle of each third spray unit 123 may be blunter as the third spray unit 123 is disposed closer to the center of the main body 110.

Accordingly, the folded terrace portion 25 may be cooled more uniformly and evenly.

Meanwhile, the cooling unit 100 may be disposed close to the secondary battery 1. More specifically, the cooling unit 100 may be disposed such that when the secondary battery 1 passes through the cooling unit, at least part of the folded terrace portion 25 is located inside the main body 110. That is, at least part of the folded terrace portion 25 may be located at the inner position than an imaginary plane connecting two end portions of the main body 110.

Accordingly, the distance between the plurality of spray units 120 and the folded terrace portion 25 may be smaller, and the cooling efficiency for the folded terrace portion 25 may be improved.

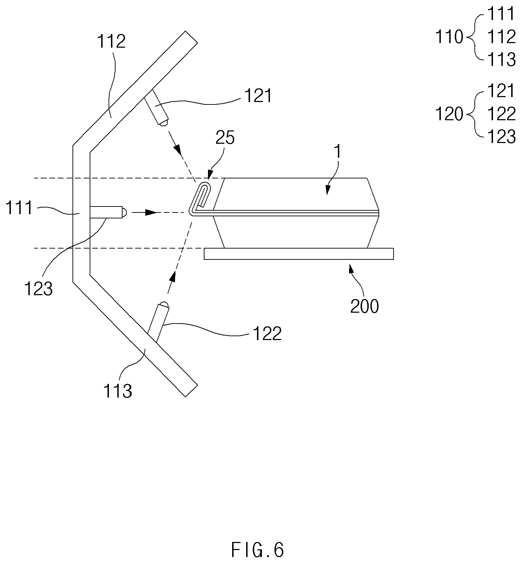

FIG. 6 is a front view of the cooling unit for the secondary battery according to another embodiment of the present disclosure.

Hereinafter, any description shared with the foregoing description is omitted and differences will be described.

In the case of this embodiment, the main body 110 may bend in the direction surrounding the folded terrace portion 25. The main body 110 may bend in the direction surrounding the transfer path P of the secondary battery 1.

For example, the center part 111 may be formed approximately vertically, and the first end part 112 and the second end part 113 may bend at a predetermined angle to the center part 111. Here, the predetermined angle may be an obtuse angle that is larger than 90° and smaller than 180°.

When the first spray units 121 are arranged in multiple lines, the angle of each first spray unit 121 may be equal to each other. When the second spray units 122 are arranged in multiple lines, the angle of each second spray unit 122 may be equal to each other. When the third spray units 123 are arranged in multiple lines, the angle of each third spray unit 123 may be equal to each other.

The foregoing description has been made to describe the technical aspect of the present disclosure by way of example, and it is obvious to persons having ordinary skill in the technical field pertaining to the present disclosure that a variety of modifications and changes may be made without departing from the essential features of the present disclosure.

Therefore, the disclosed embodiments are provided to describe the technical aspect of the present disclosure but not intended to be limiting, and the technical scope of the present disclosure is not limited by these embodiments.

The scope of protection of the present disclosure should be interpreted by the appended claims, and it should be interpreted that all the technical spirit within the equivalent scope is included in the scope of protection of the present disclosure.

### [List of Reference Numerals]

| | | | |
|---|---|---|---|
| 1: | Pouch-type secondary battery | 25: | Second terrace portion, Folded terrace portion |
| 25a: | First folding portion | 25b: | Second folding portion |
| 100: | Cooling unit | 100a: | Feed flow channel |
| 110: | Main body | 111: | Center part |
| 112: | First end part | 113: | Second end part |
| 120: | Spray unit | 121: | First spray unit |
| 122: | Second spray unit | 123: | Third spray unit |
| 200: | Transfer unit | | |

## Claims

1. A cooling unit for a secondary battery for cooling a folded terrace portion of a pouch-type secondary battery, the cooling unit for the secondary battery comprising:
a main body, wherein at least part of the main body curves or bends in a direction surrounding the folded terrace portion; and
a plurality of spray units disposed at an inner surface of the main body and configured to spray gas toward the folded terrace portion.

2. The cooling unit for the secondary battery according to claim 1,
wherein the plurality of spray units are configured to spray the gas of lower temperature than room temperature.

3. The cooling unit for the secondary battery according to claim 1,
wherein the plurality of spray units are configured to spray the gas toward the folded terrace portion at different angles.

4. The cooling unit for the secondary battery according to claim 1,
wherein the plurality of spray units are configured to spray the gas at an angle closer to a horizon as the spray unit is located closer to a center of the main body.

5. The cooling unit for the secondary battery according to claim 1,
wherein the main body is extended parallel to a length direction of the folded terrace portion, and
wherein the plurality of spray units are arranged in multiple lines along the length direction of the folded terrace portion.

6. The cooling unit for the secondary battery according to claim 1,
wherein the main body includes:
a center part positioned to overlap the secondary battery in a length direction or width direction of the secondary battery; and
a first end part and a second end part connected to the center part and located at opposite sides with the center part positioned therebetween, and
wherein the first end part and the second end part curve or bend in a direction of getting closer to each other.

7. The cooling unit for the secondary battery according to claim 6,
wherein the center part, the first end part and the second end part curve with a same radius of curvature.

8. The cooling unit for the secondary battery according to claim 1,
wherein the plurality of spray units include:
a first spray unit configured to spray the gas from a side of the folded terrace portion in a thickness direction of the secondary battery; and
a second spray unit configured to spray the gas from an opposite side of the folded terrace portion in the thickness direction of the secondary battery.

9. The cooling unit for the secondary battery according to claim 8,
wherein the plurality of spray units further include:
a third spray unit located between the first spray unit and the second spray unit.

10. The cooling unit for the secondary battery according to claim 1,
wherein the main body has a feed flow channel inside, and the feed flow channel communicates with the plurality of spray units and is configured to feed the gas.

11. A secondary battery manufacturing system comprising:
a transfer unit configured to transfer a pouch-type secondary battery; and
a cooling unit configured to cool a folded terrace portion of the secondary battery,
wherein the cooling unit includes:
a main body, wherein at least part of the main body curves or bends in a direction surrounding a transfer path of the secondary battery; and
a plurality of spray units disposed at an inner surface of the main body and configured to spray gas toward the folded terrace portion of the secondary battery.
